# EUROPEAN PATENT APPLICATION

(11) **EP 2 813 997 A1**
(43) Date of publication of application: **17.12.2014**
(21) Application number: 13746584.5
(22) Date of filing: 05.02.2013
(51) Int. Cl.: G06Q 40/04

(54) **METHOD AND APPARATUS FOR TRADING SECURITIES**

(30) Priority: 06.02.2012 KR 20120011892; 21.02.2012 KR 20120017431
(71) Applicant: Koo, Min Soo, Paju-si, Gyeonggi-do 413-120 (KR); Kim, Dae Youn, Seoul 158-769 (KR); Oh, Chel Ho, Namyangju-si, Gyeonggi-do 472-080 (KR)
(72) Inventor: Koo, Min Soo, Paju-si, Gyeonggi-do 413-120 (KR); Kim, Dae Youn, Seoul 158-769 (KR); Oh, Chel Ho, Namyangju-si, Gyeonggi-do 472-080 (KR)
(74) Representative: Betten & Resch
(86) International application number: PCT/KR2013/000904
(87) International publication number: WO 2013/119013

(57) **Abstract**

The present invention relates to a method and apparatus for transaction securities. According to the present invention, a disposal restriction on securities can be set or canceled by setting up a security right or creating other contracts according to an enterprise declaration of will. Also, according to the present invention, securities liquidity and stability can be increased by enabling an owner of securities to dispose of the securities having a disposal restriction set through a sell restriction management agreement, as well as by imposing certain restrictions on disposal.

## Description

### [Technical Field]

The present invention relates to a method and apparatus for transaction securities, and more specifically to, a method and apparatus for transaction securities on which a disposal restriction is set through an agreement among an owner of securities, a lender, and a securities company.

### [Background Art]

In a financial loan transaction, an owner of securities may take out a loan from a financial agency by offering the securities as security. In this case, a pledge right may be established in the above-described securities. Here, the pledge right refers to the right of a creditor to occupy an object received from a debtor or the like so as to secure receivables, indirectly compel to perform debt repayment by detaining the object until the debtor's repayment is performed, and receive preferential repayment from the object when there is no repayment.

When the pledge right is established in securities, the securities are occupied by the financial agency so thath the owner of the securities may be restricted his property disposal activities. In particular, because a value of the securities such as stocks changes with the passage of time, the restriction of the property disposal activities by the owner of the securities may cause unexecuted damage to the owner. For example, although it is necessary to dispose of the securities so as to secure profits when the value of the securities is raised and prevent an additional loss when the value of the securities is lowered, it is impossible to dispose of the securities because the securities in which the pledge right has been established is occupied by the financial agency.

Accordingly, technology capable of improving profitability by increasing securities liquidity even when a security right such as the pledge right is established and a disposal restriction is set on the securities is required.

### [Disclosure]

### [Technical Problem]

The present invention has been made to solve the above-described problem and an object of the invention is to enable securities on which a disposal restriction is set to be traded.

### [Technical Solution]

According to an exemplary embodiment of the present invention, there is provided a securities transaction method. The method may include the steps of: receiving a sell order for securities from a customer or a manager; determining whether a sell restriction and a sell restriction management agreement are set on the securities by referring to an account information database (DB) of the customer; removing the sell restriction set on the securities in the account information DB when the sell restriction and the sell restriction management agreement are set on the securities; executing a sell trade for the securities for which the sell restriction is removed according to the sell order; setting a securities buy restriction on a sell execution money amount generated by executing the sell trade in the account information DB; setting a withdrawal restriction, a transfer restriction, and a securities buy restriction on customer deposits which are cash of the sell execution money amount in the account information DB when the cash of the sell execution money amount is generated; and removing the transfer restriction set on the customer deposits in the account information DB and transferring the customer deposits for which the transfer restriction is canceled to a lender.

According to an exemplary embodiment of the present invention, there is provided a securities transaction apparatus. The apparatus may include an interface module configured to communicate with a customer, a manager, and a lender; an account information DB including attribute information about whether a sell restriction, a delivery restriction, an transfer restriction, and a sell restriction management agreement are set on securities included in a securities account of the customer, attribute information about whether a securities buy restriction is set on a sell execution money amount, and attribute information about whether a withdrawal restriction, a transfer restriction, and the securities buy restriction are set on customer deposits; a sell order permission determination module configured to determine whether the sell restriction and the sell restriction management agreement are set on the securities by referring to the account information DB when the interface module receives the sell order for the securities from the customer or the manager; a securities restriction cancelation module configured to cancel the sell restriction set on the securities in the account information DB when the sell order permission determination module determines that the sell restriction and the sell restriction management agreement are set on the securities; an order processing module configured to execute a sell trade for the securities for which the sell restriction is canceled according to the sell order; a sell execution money amount restriction setting module configured to set the securities buy restriction on the sell execution money amount generated by executing the sell trade by the order processing module in the account information DB; a customer deposits restriction setting module configured to set the withdrawal restriction, the transfer restriction, and the securities buy restriction on the customer deposits which are cash of the sell execution money amount in the account information DB when the cash of the sell execution money amount is generated; a customer deposits restriction cancelation module configured to cancel the transfer restriction set on the customer deposits in the account information DB; and a transfer module configured to transfer the customer deposits for which the transfer restriction is canceled to the lender.

### [Advantageous Effects]

According to the present invention, a disposal restriction on securities can be set or canceled by setting up a security right or creating other contracts according to an electronic declaration of intention. Also, according to the present invention, securities liquidity and stability can be increased by enabling an owner of securities to dispose of the securities having a disposal restriction set through a sell restriction management agreement, as well as by imposing certain restrictions on disposal.

### [Description of Drawings]

A brief description of each drawing is provided in order to more fully understand the drawings cited in the detailed description of the present invention:
FIG. 1 illustrates a securities transaction system according to an exemplary embodiment of the present invention;
FIG. 2 illustrates an example of an account information DB according to an exemplary embodiment of the present invention;
FIG. 3 illustrates a securities transaction method performed by a securities company server according to an exemplary embodiment of the present invention;
FIG. 4 illustrates a method of setting a disposal restriction on customer deposits according to an exemplary embodiment of the present invention;
FIG. 5 illustrates a method of transferring the customer deposits to a lender according to an exemplary embodiment of the present invention;
FIG. 6 illustrates a method of buying the securities according to an exemplary embodiment of the present invention; and
FIG. 7 illustrates a securities transaction apparatus according to an exemplary embodiment of the present invention.

### [Modes of the Invention]

The present invention, an operational advantage of the present invention, and an object achieved through the implementation of the present invention will be fully understood through the reference of the accompanying drawings exemplifying an exemplary embodiment of the present invention and contents described in the drawings.

The exemplary embodiment is provided only for illustrative purposes and for full understanding of the scope of the present invention by those skilled in the art. However, the present invention is not restricted to an exemplary embodiment disclosed below and may be implemented in various forms. Rather, the exemplary embodiment is provided to more sincerely and fully disclose the present invention and to completely transfer the spirit of the present invention to those skilled in the art to which the present invention pertains.

Hereinafter, an exemplary embodiment of the present invention will be described in detail with reference to the accompanying drawings.

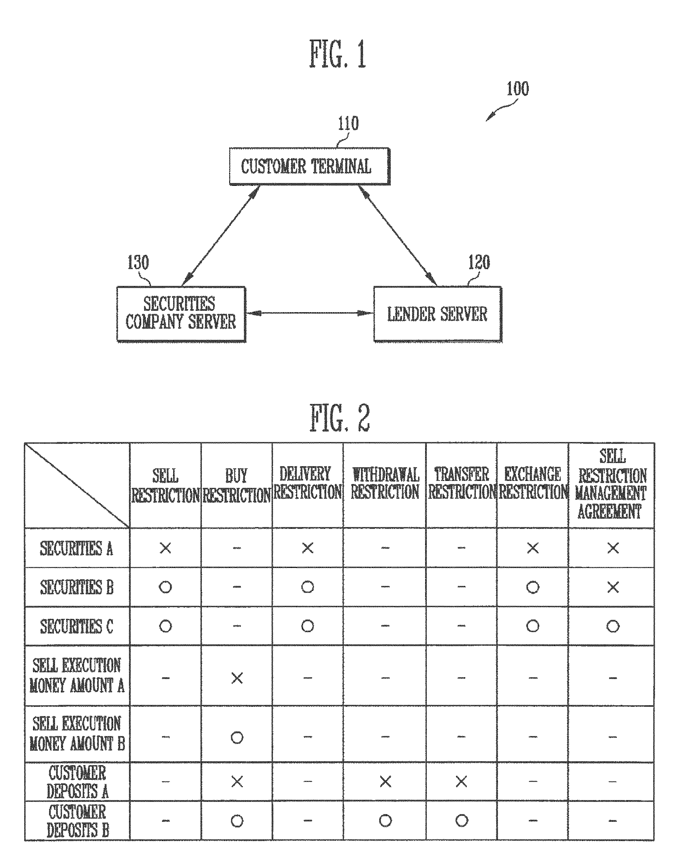

FIG. 1 illustrates a securities transaction system 100 according to an exemplary embodiment of the present invention. The system 100 may include a customer terminal 110, a lender server 120, and a securities company server 130. Here, the terminal may be referred to as an electronic hardware device to be used to input data to or display data on a computer or a computing system, and the server may be referred to as a computer for processing a request from a client computer under a network environment. Hereinafter, a process of transaction securities among the customer terminal 110, the lender server 120, and the securities company server 130 in an online securities transaction system will be described. This process may be performed in the same scheme as in an offline securities transaction system, and the present invention may include a securities transaction method of the offline securities transaction system. Although the terminal or server is illustrated as an apparatus for enabling a customer, a lender, and a securities company to carry out the present invention in FIG. 1, this is only an example and various computing devices may be used according to an exemplary embodiment to which the present invention is applied. For simplicity of description, the technology and spirit of the present invention based on the customer terminal 110, the lender server 120, and the securities company server 130 illustrated in FIG. 1 will be described.

The customer terminal 110 refers to a terminal of an owner of the securities taking out the loan from the lender by offering the securities as security. The lender server 120 refers to a server which is operated and managed by the lender such as a bank which provides a secured loan service in which the securities provided by the customer are set as the security or the like. The securities company server 130 refers to a server which is operated and managed by the securities company which provides services of selling of the securities, establishment of the security right. In a specific case, an operation of the securities company server may be controlled through a manager terminal (not illustrated) of the securities company server.

In the present invention, loan principal and interest refer to a loan taken out by the customer from the lender, includes loan principal and loan interest, and may further include remaining loan principal and interest when part of the loan principal and interest is repaid. When damages are caused by defaults, delay of payment, an unlawful act, or the like, the damages may also be included in the loan principal and interest.

In general, the securities are based on securitization of valuables or property rights. The securities used in the present invention refer to securities capable of being traded by the securities company server among the securities. The security right is established in the securities provided by the customer as security for the loan principal and interest. The securities in which the security right is established as described above are occupied by the lender who is a mortgagee in principle. However, the security right of the present invention is based on a different occupancy method in a state in which the nature of the general security right as described above is maintained according to an agreement or decree among parties (that is, the customer, the securities company, and the lender), and has content in which the securities provided to secure the loan principal and the interest of the customer are occupied by the securities company rather than the lender, the disposal of the securities by the customer is restricted, but in a specific case, the disposal by the customer is possible. The agreement between the parties may be referred to as a sell restriction management agreement in the present invention. Specifically, even when the securities in which the security right is established are transferred to the securities company, delivery, selling, and transfer of the securities are not permitted in principle. This is to ensure the status of a mortgagee. However, when the sell restriction management agreement according to the present invention is set on the securities, the selling of the securities by the customer may be permitted. When the securities are sold, the securities disappear and a sell execution money amount and customer deposits according to cash of the sell execution money amount are generated. Here, the security right established in the sell execution money amount and the customer deposits becomes valid. Accordingly, the buying of securities according to the sell execution money amount, the withdrawal and transfer of the customer deposits, and the buying of securities according to the customer deposits are not permitted in principle. However, the transfer of the customer deposits or the like for repaying the loan principal and interest according to the sell restriction management agreement may be permitted.

Thus, the sell restriction management agreement of the present invention enables the owner of the securities in which the security right is established to dispose of the securities and can ensure the status of the mortgagee of the lender by imposing certain restrictions on disposal. Hereinafter, a method in which the securities company server trades the securities according to the sell restriction management agreement will be described. Although the technology and spirit of the present invention related to the securities in which the security right is established will be described for simplicity of the description, the present invention is also applicable to securities on which a disposal restriction is set by a contract between parties rather than the security right.

FIG. 2 illustrates an example of an account information DB according to an exemplary embodiment of the present invention. Here, the account information DB refers to a DB within the securities company server including at least one of attribute information among the securities, the sell execution money amount, and the customer deposits included within a securities account of the customer. The securities company server can execute the disposal of the securities, the sell execution money amount, and the customer deposits included within the securities account of the customer based on the attribute information included within the account information DB. A configuration of the account information DB illustrated in FIG. 2 is an example, and various configurations are applicable according to an exemplary embodiment to which the present invention is applied.

In relation to the securities, the account information DB may include attribute information about items and a quantity of securities and attribute information about whether the sell restriction, the delivery restriction, the exchange restriction, and the sell restriction management agreement are set on the securities. As illustrated, no restriction is set on securities A serving as general securities. Accordingly, selling, delivery, and exchange for the securities A may be all permitted. When the securities are deposited, the securities may first be set so that selling, delivery, and exchange may be all permitted without any restriction as in the securities A. This state may be referred to as a default state. Securities B are securities in which a general security right is established. A sell restriction, a delivery restriction, and an exchange restriction are set on the securities B. Accordingly, any disposal of the securities B is not permitted. At last, securities C are securities on which the sell restriction management agreement according to the present invention is set along with the security right. The sell restriction, the delivery restriction, and the exchange restriction are set on the securities C. Accordingly, the selling, the delivery, and the exchange for the securities C are not permitted in principle. However, the sell restriction set on the securities C may be temporarily canceled according to the sell restriction management agreement.

In relation to the sell execution money amount, the account information DB may include attribute information about whether the securities buy restriction is set on the sell execution money amount. Here, the sell execution money amount is generated by the sell execution of the securities and is an amount of money before encashment. Before the encashment, the withdrawal and transfer are not permitted for the sell execution money amount. However, the buying of the securities using the sell execution money amount may be permitted. As illustrated, no restriction is set on a sell execution money amount A serving as a general sell execution money amount. Accordingly, the buying of the securities using the sell execution money amount A may be permitted. When a sell execution money amount is generated, the setting may first be performed as in the sell execution money amount A. This state may be referred to as the default state. The sell execution money amount B serves as a sell execution money amount generated by selling the securities on which the sell restriction management agreement according to the present invention is set along with the security right. On the sell execution money amount B, the security buy restriction is set. Accordingly, buying of the securities using the sell execution money amount B is not permitted in principle. However, the buy restriction may be temporarily canceled as will be described later.

In relation to the customer deposits, the account information DB may include attribute information about whether the withdrawal restriction, the transfer restriction, and the securities buy restriction are set on the customer deposits. Here, the customer deposits are cash included in the account of the customer, and may include cash of the sell execution money amount as well as cash input or transferred by the customer. Accordingly, the withdrawal and transfer of the customer deposits and the buying of the securities using the customer deposits may be permitted in principle. As illustrated, no restriction is set on customer deposits A serving as general customer deposits. Accordingly, the withdrawal and transfer of the customer deposits and the buying of the securities using the customer deposits may be permitted. When the customer deposits are generated, the setting may first be performed as in the customer deposits A. This state may be referred to as the default state. Customer deposits B are customer deposits generated by selling securities on which the sell restriction management agreement according to the present invention is set along with the security right. The withdrawal restriction and the transfer restriction of the customer deposits and the securities buy restriction of the customer deposits are set on the customer deposits B. Accordingly, the withdrawal and transfer of the customer deposits B and the buying of the securities using the customer deposits B is not permitted in principle. However, the transfer restriction or the buy restriction set on the customer deposits B may be temporarily canceled as will be described later.

The account information DB can automatically reflect a change due to an deposit, delivery, buying, selling, and exchange of the securities. For example, when the securities are deposited or bought, their content is registered in the account information DB and may be set to the default state. In addition, when the securities disappear within the account due to the delivery or exchange, the securities may be deleted within the account information DB. The account information DB may automatically reflect a change due to generation of the sell execution money amount and buying of the securities or disappearance according to encashment. For example, when the sell execution money amount is generated, its content may be automatically registered in the account information DB and set to the default state. In addition, when the securities are bought using the sell execution money amount or when the cash of the sell execution money amount is generated and the customer deposits are generated, the sell execution money amount may be deleted from the account information DB. The account information DB may automatically reflect a change due to the generation, deposit, withdrawal, and transfer of the customer deposits and the buying of the securities. For example, when the customer deposits are generated or input, their content may be automatically registered in the account information DB and set to the default state. In addition, when the customer deposits within the account disappear due to the buying of the securities or the withdrawal or transfer of the customer deposits, the customer deposits may be deleted within the account information DB. The default states for the securities, the sell execution money amount, and the customer deposits are exemplary configurations and various configurations may be used according to exemplary embodiments to which the present invention is applied.

The securities of the past registered in the account information DB may disappear due to a capital reduction, a capital increase, a stock split, a stock consolidation, stock retirement, etc. and new securities or cash (that is, customer deposits) may be generated. In addition, allotted stocks (that is, new securities) by a stock dividend or a dividend (that is, new customer deposits) by a cash dividend may be generated from the securities of the past. In this case, the new securities or customer deposits are registered in the account information DB and attribute information of the securities of the past may be inherited. That is, if the sell restriction and the sell restriction management agreement are set on the securities of the past, the sell restriction and the sell restriction management agreement may also be set on the new securities and the withdrawal restriction, the transfer restriction, and the securities buy restriction may also be set on the new customer deposits. Through the above-described settings, the new securities or customer deposits may become valid as in the past. The present invention may be applied to the new securities or customer deposits as in the securities of the past.

The securities company server may receive attribute information about at least one of the securities, the sell execution money amount, and the customer deposits included in the account information DB. The attribute information may be received from a manger terminal of a securities company server manager. When the attribute information is received, the attribute information about least one of the securities, the sell execution money amount, and the customer deposits in the account information DB may be changed according to the attribute information. For example, when the security right is established or canceled in the securities registered in the account information DB, attribute information about the setting or cancelation of the sell restriction of the securities is generated through the manager terminal and the attribute information may be reflected in the account information DB. In addition to the above-described example, all attribute information about disposal restrictions of the securities, the sell execution money amount, and the customer deposits registered in the account information DB may be modified through the manager terminal. In addition, when at least one of pieces of the attribute information input from the manager terminal or attribute information within the account information DB according to processing of a buy order or a sell order is changed, the lender can rapidly identify a change of the attribute information by transmitting a message related to the changed attribute information to the lender server.

In the account information DB according to the present invention as described above, the sell restriction, the delivery restriction, and the exchange restriction set on the securities, the securities buy restriction set on the sell execution money amount, the delivery restriction, the transfer restriction, and the securities buy restriction set on the customer deposits may be content of the security right set to secure the loan principal and interest of the customer. The security right, for example, may be a pledge right, a security by means of transfer, or the like. Here, a legal effect such as the establishment and cancelation of the security right is generated according to a related law or a contract between parties. The legal effect is not generated according to the setting and/or cancelation of various types of restrictions for the securities, the sell execution money amount, and the customer deposits in the account information DB, and the legal effect generated in reality is only reflected in a data processing process.

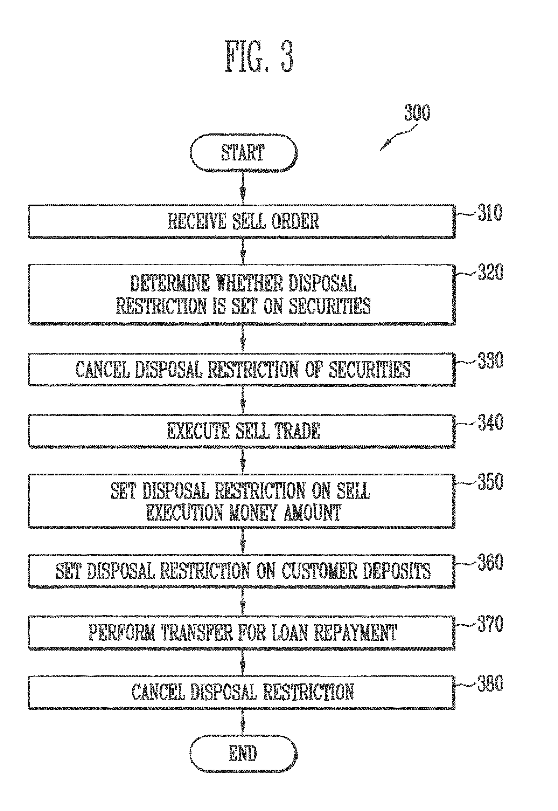

FIG. 3 illustrates a securities transaction method 300 performed by the securities company server according to an exemplary embodiment of the present invention.

First, in step 310, a sell order for the securities may be received. The sell order may include an item and a quantity of the securities serving as a target of the sell order, a sell price of the securities, personal information of an owner of the securities, etc. In addition, the sell order may be performed for some of the securities as well as a total of the securities. The sell order may be received from the customer terminal or received by receiving a sell intention for the securities of the customer through a wired link or by visiting a business branch. In addition, the securities company server can receive a sell order caused by execution of the security right or the like from the manager terminal or the lender server.

Continuously, in step 320, it is possible to determine whether a disposal restriction has been set on the securities serving as a target of the received sell order. The securities company server makes the above-described determination by referring to the account information DB including the securities account information of the customer. Specifically, the securities company server may determine whether the sell restriction and the sell restriction management agreement have been set on the securities.

When the result of the determination (step 320) represents that the sell restriction has not been set, the securities company server may execute the sell trade for the securities through the stock market according to the received sell order.

When the result of the determination (step 320) represents that the sell restriction on the securities has been set and the sell restriction management agreement has not been set, the above-described sell order may be rejected because the securities company server cannot execute the sell trade due to the sell restriction of the above-described securities.

Continuously, when it is determined that the sell restriction and the sell restriction management agreement have been set on the securities (step 320), the disposal restriction set on the securities may be canceled in the account information DB (step 330). Here, the disposal restriction set on the securities may be canceled by removing the sell restriction set on the securities. Although selling is not permitted when the sell restriction is set on the securities due to the security right in principle as described above, it is possible to cancel the sell restriction of the securities set in the account information DB when the sell restriction management agreement is set according to the present invention. A sell approval request message for selling the securities may be transmitted to the lender server before the sell restriction of the securities set in the account information DB is canceled, and the sell restriction set on the securities in the account information DB may be canceled when a sell approval message for the securities is received from the lender server in response to the transmission. Here, the above-described sell approval message may include a message related to the presence/absence of transfer approval for the customer deposits to be generated by selling the securities. Because the above-described sell approval message includes the message related to the presence/absence of the transfer approval, then the securities company server does not need to transmit the transfer approval request message for the customer deposits when the customer deposits are transferred.

Continuously, when the sell restriction set on the securities is canceled, it is possible to execute the sell trade for the securities for which the sell restriction is canceled according to the sell order (step 340). The sell trade may be executed through the stock market. The sell trade is executed within a valid order time, wherein the valid order time refers to a time in which a buy or sell order requested for the market is valid. For example, this valid order time may be a period from 8 a.m. to 6 p.m.

Continuously, the disposal restriction may be set on the sell execution money amount generated by executing the sell trade (step 350). Here, the disposal restriction may be set on the sell execution money amount by setting the securities buy restriction on the sell execution money amount in the account information DB. That is, when the sell trade is executed and the sell execution money amount is generated as a result of performing the sell trade, the sell execution money amount is registered in the account information DB. At this time, the securities buy restriction may be set on the above-described sell execution money amount. In general, the sell execution money amount is not immediately encashed and input to the account of the customer even when the sell trade is executed. The cash of the sell execution money amount is generated after settlement of the securities company is performed. In this settlement, for example, a period of about three days may be required. Accordingly, because the sell execution money amount is not a cash amount of money, transfer, withdrawal, etc. are not permitted. However, because the buying of the securities using the sell execution money amount is permitted, the disposal by the customer is restricted by setting the securities buy restriction on the sell execution money amount in step 350 and the status of a mortgagee of the lender may be ensured.

In an exemplary embodiment, it is possible to generate a loan by offering the sell execution money amount generated by executing the sell trade as security. It is possible to generate a cash amount of money corresponding to the sell execution money amount through this loan trade. When the loan is generated, steps 360 and 370 as will be described later are performed for the loan rather, than the customer deposits of cash of the money amount of the sell, and therefore the loan for the lender may be repaid. Here, step 360 may be omitted when the immediate transfer to the account of the lender is possible after the loan is generated. In addition, when the transfer is performed, a portion corresponding to the interest in the loan is transferred to the account of the securities company and a portion excluding the interest in the loan is transferred to the account of the lender. Here, the portion corresponding to the interest in the loan may be calculated by applying an interest rate designated by a contract between parties (the customer and the securities company) to the portion excluding the interest in the loan from a point in time at which the loan is generated to a point in time at which the loan disappears. Thereafter, when cash of the above-described sell execution money amount is generated and the customer deposits are generated, the loan may disappear by offsetting the customer deposits and the loan.

In contrast, when there is an unexecuted quantity in which the sell execution has failed in the securities as the result after the sell trade has been executed within the valid order time, the disposal restriction may be set on the unexecuted quantity. Here, the disposal restriction may be set on the unexecuted quantity by setting the sell restriction on the unexecuted quantity in the account information DB.

In an exemplary embodiment, the securities company server may receive an order for canceling the sell order during the sell trade is performed according to the sell order. The cancel order may be executed for some of the securities as well as a total of the securities serving as a target of the sell order. The cancel order may be received from the customer or manager. For the customer, the cancel order may be received from the customer terminal or received by receiving a cancelation intention for the buy order of the customer through a wired link or by visiting a business branch. In response to the reception of the cancel order, the securities company server may cancel the sell order through the stock market, and set the disposal restriction (that is, the sell restriction) on the unexecuted quantity in which the sell trade is not executed in the securities in the account information DB.

Continuously, when the customer deposits are generated by generating cash of the sell execution money amount through settlement of the securities company, it is possible to set the disposal restriction on the customer deposits (step 360). The disposal restriction may be set on the customer deposits by setting the withdrawal restriction, the transfer restriction, and the securities buy restriction on the customer deposits in the account information DB. It is possible to restriction the disposal by the customer by setting the disposal restriction on the customer deposits and ensure the status of the mortgagee of the lender. Although the customer deposits may be transferred to the account of the lender for loan repayment as will be described later, this is to restriction the disposal of the customer for the customer deposits until the transfer is possible because a time at which the customer deposits are generated does not match a time at which the transfer is possible or the lender may not approve the transfer. However, when the generation time of the customer deposits matches the transfer time, step 360 is omitted and the customer deposits may be immediately transferred.

In an exemplary embodiment, the withdrawal restriction, the transfer restriction, and the securities buy restriction for the customer deposits may be collectively set on a total of the customer deposits.

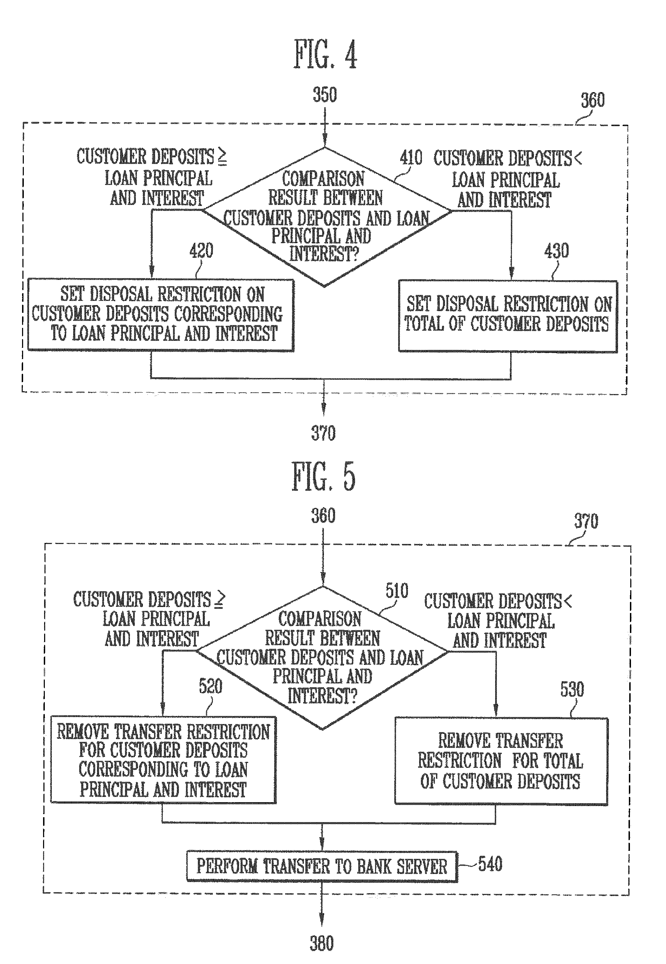

In another exemplary embodiment, the withdrawal restriction, the transfer restriction, and the securities buy restriction may be set on the customer deposits based on the comparison between the customer deposits and the loan principal and interest. FIG. 4 illustrates a method of setting a disposal restriction on customer deposits according to an exemplary embodiment of the present invention. As illustrated, step 360 may include step 410 of comparing the customer deposits to the loan principal and interest; step 420 of setting the disposal restriction on customer deposits corresponding to the loan principal and interest among the customer deposits in the account information DB when a result of the comparison represents that the customer deposits are greater than or equal to the loan principal and interest; and step 430 of setting the disposal restriction on a total of the customer deposits in the account information DB when the result of the comparison represents that the customer deposits are less than the loan principal and interest. That is, when the customer deposits are greater than the loan principal and interest, it is unnecessary to restriction property disposal activities by setting the disposal restriction on the total of the customer deposits because loan repayment is possible using only the customer deposits corresponding to the loan principal and interest.

Returning to FIG. 3, it is possible to transfer the customer deposits for which the transfer restriction is canceled to the account of the lender after the transfer restriction is canceled in the disposal restriction set on the customer deposits in the account information DB (step 370). It is possible to repay the loan principal and interest which become a cause of the establishment of the security right for the securities through step 370. In this case, before the transfer restriction set on the customer deposits is canceled, the transfer approval request message for the customer deposits may be transmitted to the lender server. When a transfer approval message for the customer deposits is received from the lender server in response to the transmission, the transfer restriction set on the customer deposits may be canceled in the account information DB and the customer deposits for which the transfer restriction is canceled may be transferred to the account of the lender.

In an exemplary embodiment, the cancelation of the transfer restriction may be collectively performed for a total of the customer deposits. In this case, the customer deposits for which the transfer restriction is canceled are transferred to the account of the lender. When the customer deposits exceed the loan principal and interest, the lender server may return an excess portion to the securities account of the customer.

In another exemplary embodiment, the transfer restriction may be canceled based on the comparison between the customer deposits and the loan principal and interest. FIG. 5 illustrates a method of transferring the customer deposits to the lender according to an exemplary embodiment of the present invention. As illustrated, step 370 may further include step 510 of comparing the customer deposits and the loan principal and interest; step 520 of removing the transfer restriction set on customer deposits corresponding to the loan principal and interest in the account information DB when a result of the comparison represents that the customer deposits are greater than or equal to the loan principal and interest; step 530 of removing the transfer restriction set on a total of the customer deposits in the account information DB when the result of the comparison represents that the customer deposits are less than the loan principal and interest; and step 540 of transferring the customer deposits for which the transfer restriction is canceled to the account of the lender. When the customer deposits are greater than the loan principal and interest, it is unnecessary to transfer the total of the customer deposits because the loan repayment is possible using only the customer deposits corresponding to the loan principal and interest. When the securities company server receives a message related to loan repayment completion from the lender server, the customer may freely perform disposal activities on the customer deposits which are not transferred.

Although the step of transferring the customer deposits to the account of the lender is performed in the exemplary embodiment, the transfer may not be performed due to other reasons such as computer problems. In this case, the transfer restriction may be set on the customer deposits in the account information DB again, and a transfer failure message may be transmitted to at least one of the customer terminal, the manager terminal, and the lender server.

Returning to FIG. 3, when a message representing that repayment of the loan principal and interest has been completed has been received from the lender server, it is possible to cancel all disposal restrictions set on at least one of the securities, the sell execution money amount, and the customer deposits so as to secure the above-described loan principal and interest in the account information DB (step 380). This is because it is unnecessary to maintain the restriction set within the account information DB when the loan repayment is completed. In this case, a message related to the repayment of the loan principal and interest and the cancelation of the security right may be transmitted to the customer terminal.

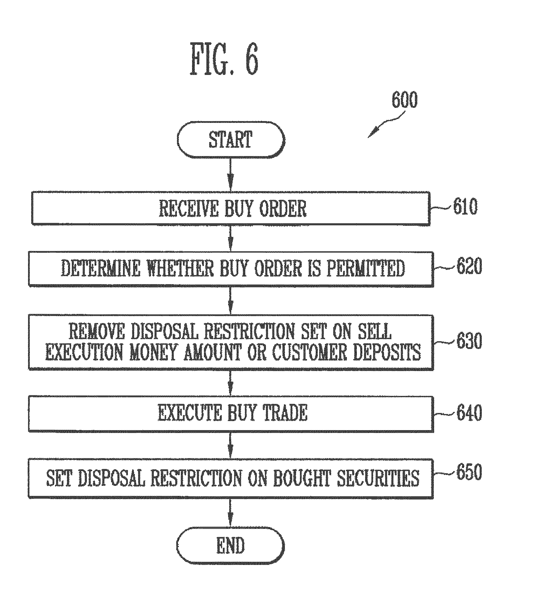

In an exemplary embodiment, the securities company server may receive a trade stop signal from the manager terminal or the lender server. The trade stop signal may be used when it is necessary to stop the trade due to attachment, provisional attachment, and other reasons in relation to at least one of the securities, the sell execution money amount, and the customer deposits. When the trade stop signal is for the securities on which the sell restriction is set in the account information DB, the sell restriction set on the securities is not canceled in the account information DB until a trade resumption signal for the securities is received from the manager terminal or the lender server. Because the trade stop signal targets the securities for which the sell restriction is not canceled, the trade stop signal may be received before step 330 of FIG. 3. When the trade stop signal is for the securities for which the sell trade is in execution, the securities company server may cancel the sell order for the securities through the stock market so as to stop the sell trade in execution and set the sell restriction on an unexecuted quantity in which the sell trade is not executed among the securities in the account information DB. In this case, until the trade resumption signal for the securities is received from the manager terminal or the lender server, the sell restriction set on the unexecuted quantity is not canceled in the account information DB. Because the trade stop signal targets the securities for which the sell trade is in execution, it may be received after step 340 of FIG. 3. When the trade stop signal is for the sell execution money amount, the securities buy restriction set on the sell execution money amount is not canceled in the account information DB until the trade resumption signal for the sell execution money amount is received from the manager terminal or the lender server. Because the trade stop signal targets the sell execution money amount, it may be received after step 350 of FIG. 3. When the trade stop signal is for the customer deposits, the transfer restriction set on the customer deposits is not canceled in the account information DB until the trade resumption signal for the customer deposits is received from the manager terminal or the lender server. Because the trade stop signal targets the customer deposits, it may be received after step 360 of FIG. 3. When the trade stop signal is for the sell execution money amount or the customer deposits in which the buy trade is in execution, the securities company server may cancel the buy order for the securities through the stock market so as to stop the buy trade in execution and set the securities buy restriction on the non-execution money amount in which the buy trade is not executed in the sell execution money amount or the customer deposits in the account information DB. In this case, until the trade resumption signal for the sell execution money amount or the customer deposits is received from the manager terminal or the lender server, the securities buy restriction on the non-execution money amount is not canceled in the account information DB. Because the trade stop signal targets the sell execution money amount or the customer deposits in which the buy trade is in execution, it may be received after step 640 of FIG. 6. That is, when the trade stop signal is generated for the securities in relation to the sell execution money amount or the customer deposits generated by selling the above-described securities or securities on which the sell restriction management agreement is set, any disposal including the selling of the securities and the transfer of the customer deposits is not permitted until a trade resumption signal is received.

In an exemplary embodiment, new securities or customer deposits may be generated from securities on which the sell restriction and a sell restriction management agreement are set in the account information DB due to a capital decrease, a capital increase, a stock split, a reverse stock split, stock retirement, etc. In this case, the securities company server may set the sell restriction and the sell restriction management agreement on the new securities or set the withdrawal restriction, the transfer restriction, and the securities buy restriction on the new customer deposits in the account information DB.

In an exemplary embodiment, after receiving attribute information about at least one of the securities, the sell execution money amount, and the customer deposits included in the securities account of the customer from the manager terminal, the securities company server may change attribute information about at least one of the securities, the sell execution money amount, and the customer deposits in the account information DB according to the received attribute information. In addition, when at least one of pieces of the attribute information input from the manager terminal or attribute information within the account information DB according to processing of a buy order or a sell order is changed, a message related to the changed attribute information may be transmitted to the lender server. This is aimed at enabling the lender to rapidly identify a change of the attribute information within the account information DB.

In an exemplary embodiment, the securities company server may receive information about loan principal and interest including loan principal, loan interest, a repayment history, and an item and a quantity of the securities for securing the loan principal and interest from the lender server. The reception may be performed periodically or aperiodically. In addition, the securities company server may transmit information about a value and a mortgage rate of the securities on which the sell restriction and the sell restriction management agreement are set in the account information DB to at least one of the lender server and the customer terminal. Here, the mortgage rate may be determined by (Value of Securities/Loan Principal and Interest). The transmission may be performed periodically or aperiodically. For example, the transmission may be performed at a time designated by an agreement among the securities company, the customer, and the lender or performed when the mortgage rate is less than or equal to a predetermined threshold value, wherein the predetermined threshold value may be a value designated by the lender. The information is an example, and the present invention is not restricted to the above-described configuration. A design may be modified in various forms according to a need of those skilled in the art. In this manner, the securities company server may contribute to the management of a security by receiving and managing information about the loan principal and interest from the lender server, and contribute to the determination of eligibility of the security by the lender by transmitting the information about the value and the mortgage rate of the securities to the lender server. In addition, it is possible to rapidly identify and cope with a situation related to the security through information sharing between the lender server and the securities company server.

Although the security buy restriction is set on the sell execution money amount or the customer deposits generated by selling the securities on which the sell restriction and the sell restriction management agreement are set in an exemplary embodiment, the securities may be bought using the sell execution money amount or the customer deposits in a certain case. FIG. 6 illustrates a method 600 of buying the securities according to an exemplary embodiment of the present invention.

The method 600 includes step 610 of receiving a buy order for buying the securities using a sell execution money amount or customer deposits on which a securities buy restriction is set in the account information DB from the customer terminal or the manager terminal; step 620 of determining whether the buy order is permitted; step 630 of removing the securities buy restriction set on the sell execution money amount or the customer deposits in the account information DB when it is determined that the buy order is permitted; step 640 of executing a buy trade according to the buy order using sell execution money amount or the customer deposits for which the securities buy restriction is canceled; and step 650 of setting a sell restriction, a withdrawal restriction, an transfer restriction, and a sell restriction management agreement on the securities bought by executing the buy trade in the account information DB.

First, in step 610, the securities company server may receive the buy order for the securities, and the buy order refers to an order for buying the securities using the sell execution money amount or the customer deposits on which the securities buy restriction is set generated by selling the securities on which the sell restriction and the sell restriction management agreement are set in the account information DB. When the sell execution money amount or the customer deposits for which the security buy restriction is canceled in the account information DB is insufficient to buy the securities according to the buy order, the buy order using the sell execution money amount or the customer deposits on which the securities buy restriction is set may be generated for a deficit. In addition, the buy order may be generated using the sell execution money amount or the customer deposits on which the securities buy restriction is set according to an intention of a person who issues the buy order regardless of the presence of the sell execution money amount or the customer deposits for which the securities buy restriction is canceled in the account information DB. The buy order may be received from the customer or manager. For the customer, the buy order may be received from the customer terminal or received by receiving a buy intention for the securities of the customer through a wired link or by visiting a business branch.

When the buy order is received, it is possible to determine whether the buy order is permitted in step 620. When an item of the securities serving as a target of the buy order is included in a buy permission list, it is possible to determine that the buy order is permitted. In addition, when the item of the securities serving as the target of the buy order is included in the buy permission list, it is possible to transmit a buy approval request message for the securities to the lender and determine that the buy order is permitted when a buy approval message for the securities is received from the lender in response to the transmission.

Here, the buy permission list represents securities capable of being bought using the sell execution money amount or customer deposits on which the disposal restriction is set. The buy permission list may include an item of the sold securities which becomes a cause of the setting of the securities buy restriction for the sell execution money amount or the customer deposits. The item of the securities within the buy permission list may be designated by a contract between parties or by the manager. In addition, the item of the securities within the buy permission list should be approved by the lender. For this, the securities company server may transmit the approval request message for the buy permission list to the lender server, and receive an approval message for the buy permission list from the lender in response to the transmission. In this case, step 620 may be performed using the buy permission list approved by the lender. The transmission of the approval request message for the buy permission list may be performed periodically/aperiodically. For example, when a change in the item of the securities within the buy permission list is made, the transmission may be performed.

When the result of the determining of step 620 represents that the buy order is permitted, the disposal restriction set on the sell execution money amount or the customer deposits may be canceled (step 630). Here, the disposal restriction may be canceled by removing the securities buy restriction set on the sell execution money amount or the customer deposits in the account information DB. In this case, an approval request message related to the buying of the securities may be transmitted to the lender server before the disposal restriction of the securities set on the sell execution money amount or the customer deposits is canceled, and the disposal restriction set on the sell execution money amount or the customer deposits may be canceled when an approval message related to the buying of the securities is received from the lender server in response to the transmission.

Continuously, the buy trade may be executed according to the buy order using the sell execution money amount or the customer deposits for which the disposal restriction is canceled (step 640). In relation to the execution of the sell trade, the buy trade may be executed through the stock market within a valid order time as described above. When there is a non-execution money amount in which the buy trade is not executed in the sell execution money amount or the customer deposits as a result of executing the buy trade within the valid order time (step 640), the disposal restriction may be set on the non-execution money amount in the account information DB. Here, the disposal restriction may be set on the non-execution money amount by setting the securities buy restriction on the non-execution money amount or the customer deposits in the account information DB.

In an exemplary embodiment, the securities company server may receive an order for canceling the buy order during the buy trade is performed according to the buy order (step 640). The cancel order may be executed for some of the securities as well as a total of the securities serving as a target of the buy order. The cancel order may be received from the customer or manager. For the customer, the cancel order may be received from the customer terminal or received by receiving a cancelation intention for the buy order of the customer through a wired link or by visiting a business branch. In response to the reception of the cancel order, the securities company server may cancel the buy order through the stock market, and set the disposal restriction, that is, the securities buy restriction, on the non-execution money amount in which the buy trade is not executed in the securities in the account information DB.

Returning to FIG. 6, the disposal restriction may be set on the securities bought by executing the buy trade in the account information DB (step 650). Here, the disposal restriction may be set on the securities by setting the sell restriction, the delivery restriction, the transfer restriction, and the sell restriction management agreement on the securities in the account information DB. Step 650 may include the step of setting the sell restriction, the transfer restriction, and the sell restriction management agreement on the securities in quantity equal to a quantity of sold securities among bought securities when a quantity of the bought securities is greater than a quantity of sold securities which becomes a cause of the securities buy restriction set on the sell execution money amount. That is, when the securities on which the sell restriction is set are sold due to a mistake of the customer and in order to secure profit, the securities may be re-bought and the disposal restriction of the customer is set on the re-bought securities so that the security right becomes valid and the status of the mortgagee of the lender is ensured.

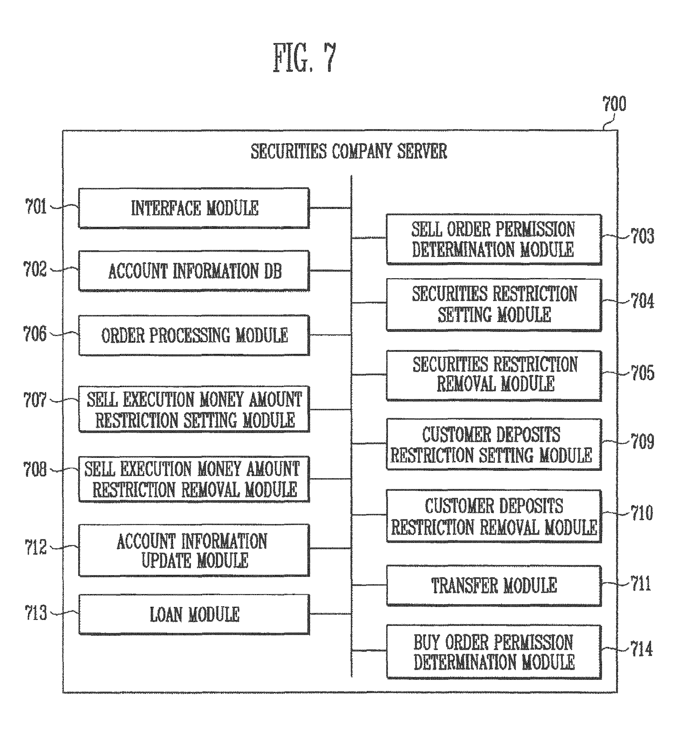

FIG. 7 illustrates a securities transaction apparatus 700 according to an exemplary embodiment of the present invention. The apparatus 700, for example, may be implemented as a computing device such as a server. The apparatus 700 may include an interface module 701, an account information DB 702, a sell order permission determination module 703, a securities restriction setting module 704, a securities restriction cancelation module 705, an order processing module 706, a sell execution money amount restriction setting module 707, a sell execution money amount restriction cancelation module 708, a customer deposits restriction setting module 709, a customer deposits restriction cancelation module 710, a transfer module 711, an account information update module 712, a loan module 713, and a buy order permission determination module 714. The interface module 701 may communicate with the customer terminal, the manager terminal, and the lender server. The account information DB 702 may include attribute information about whether a sell restriction, a delivery restriction, an transfer restriction, and a sell restriction management agreement are set on securities included in a securities account of the customer, attribute information about whether a securities buy restriction is set on a sell execution money amount, and information about whether a withdrawal restriction, a transfer restriction, and the securities buy restriction are set on customer deposits. The sell order permission determination module 703 may determine whether the sell restriction and the sell restriction management agreement have been set on the securities by referring to the account information DB 702. The securities restriction cancelation module 705 may cancel the sell restriction set on the securities in the account information DB 702. The securities restriction setting module 704 may set at least one of the sell restriction, the delivery restriction, the transfer restriction, and the sell restriction management agreement on the securities in the account information DB 702. The order processing module 706 may execute a sell trade for the securities according to the sell order, cancel a sell order in execution, or reject the sell order. The sell execution money amount restriction setting module 707 may set the securities buy restriction on a sell execution money amount generated by executing the sell trade in the account information DB 702. The sell execution money amount restriction cancelation module 708 may cancel the securities buy restriction set on the sell execution money amount in the account information DB 702. The customer deposits restriction setting module 709 may set the withdrawal restriction, the transfer restriction, and the securities buy restriction on the customer deposits which are cash of the sell execution money amount in the account information DB 702. The customer deposits restriction cancelation module 710 may cancel the transfer restriction set on the customer deposits in the account information DB 702. The transfer module 711 may transfer the customer deposits for which the transfer restriction is canceled to the account of the lender. The account information update module 712 may change attribute information about at least one of the securities, the sell execution money amount, and the customer deposits in the account information DB 702 according to attribute information received from the manager terminal. The loan module 713 may generate a loan by offering the sell execution money amount generated by executing the sell trade as security. The buy order permission determination module 714 may determine whether the buy order for buying the securities is permitted using the sell execution money amount or the customer deposits on which the securities buy restriction is set in the account information DB. The account information update module 712 may include at least one of the securities restriction cancelation module 705, the securities restriction setting module 704, the sell execution money amount restriction setting module 707, the sell execution money amount restriction cancelation module 708, the customer deposits restriction setting module 709, and the customer deposits restriction cancelation module 710, and may be configured as a module separate from the above-described modules. In addition, the modules included in the apparatus 700 may be configured as separate modules or integral modules.

In an exemplary embodiment, the sell order permission determination module 703 may determine whether the sell restriction and the sell restriction management agreement have been set on the securities by referring to the account information DB 702 when the interface module 701 receives the sell order for the securities from the customer terminal or the manager terminal. The securities restriction cancelation module 705 may cancel the sell restriction set on the securities in the account information DB 702 when a determination result represents that the sell restriction and the sell restriction management agreement have been set on the securities. The order processing module 706 may execute the sell trade for the securities for which the sell restriction is canceled according to the sell order. The sell execution money amount restriction setting module 707 may set the securities buy restriction on the sell execution money amount generated by executing the sell trade by the order processing module 706 in the account information DB 702. The customer deposits restriction setting module 709 may set the withdrawal restriction, the transfer restriction, and the securities buy restriction on the customer deposits which are cash of the sell execution money amount in the account information DB 702 when the cash of the sell execution money amount is generated. When the customer deposits restriction cancelation module 710 cancels the transfer restriction set on the customer deposits in the account information DB 702, the transfer module 711 may transfer the customer deposits for which the transfer restriction is canceled to the account of the lender. Here, when the transfer is possible when the customer deposits are generated, the transfer may be immediately performed by the transfer module 711 without passing through the customer deposits restriction setting module 709 and the customer deposits restriction cancelation module 710.

In an exemplary embodiment, when the interface module 701 receives attribute information about the at least one of the securities, the sell execution money amount, and the customer deposits included in the securities account of the customer from the manager terminal, the account information update module 712 may change the attribute information about the at least one of the securities, the sell execution money amount, and the customer deposits in the account information DB 702 according to the received attribute information. In addition, when at least one of pieces of the attribute information input from the manager terminal or attribute information within the account information DB 702 according to processing of a buy order or a sell order is changed, the interface module 701 may transmit a message related to the changed attribute information to the lender server.

In an exemplary embodiment, when the sell order permission determination module 703 determines that the sell restriction has not been set on the securities in the account information DB 702, the order processing module 706 may execute the sell trade for the securities according to the sell order.

In an exemplary embodiment, when the sell order permission determination module 703 determines that the sell restriction has been set on the securities and the sell restriction management agreement has not been set in the account information DB 702, the order processing module 706 may reject the sell order.

In an exemplary embodiment, when the sell restriction and the sell restriction management agreement have been set on the securities, the interface module 701 may transmit a sell approval request message for the securities to the lender server before the securities restriction cancelation module 705 cancels the sell restriction set on the securities. When the interface module 701 receives a sell approval message for the securities from the lender server in response to the transmission, the securities restriction cancelation module 705 cancels the sell restriction set on the securities in the account information DB 702. Here, the sell approval message may include a message related to presence/absence of transfer approval related to the customer deposits to be generated by selling the securities. Because the presence/absence of the transfer approval related to the customer deposits may be determined from the sell approval message, the interface module 701 does not need to transmit a transfer approval request message for the customer deposits when the customer deposits are transferred thereafter.

When the message related to the presence/absence of the transfer approval does not indicate the transfer approval, the customer deposits restriction cancelation module 705 does not cancel the transfer restriction set on the customer deposits to be generated by selling the securities in the account information DB 702. Accordingly, the transfer module 711 also does not transfer the customer deposits to the account of the lender. In contrast, when the message related to the presence/absence of the transfer approval indicates the transfer approval, the customer deposits restriction cancelation module 705 cancels the transfer restriction set on the customer deposits to be generated by selling the securities in the account information DB 702. Therefore, the transfer module 711 may transfer the customer deposits for which the transfer restriction is canceled to the account of the lender.

In an exemplary embodiment, the loan module 713 may generate a loan by offering the sell execution money amount to be generated by executing the sell trade as security. It is possible to immediately generate a cash amount of money corresponding to the sell execution money amount through this loan trade. Repayment of the loan principal and interest may be performed for the loan rather than the customer deposits of cash of the sell execution money amount. That is, when the customer deposits restriction setting module 709 sets the withdrawal restriction, the transfer restriction, and the securities buy restriction on the loan in the account information DB 702 and the customer deposits restriction cancelation module 710 cancels the transfer restriction set on the loan in the account information DB 702, the transfer module 711 may transfer the loan for which the transfer restriction is canceled to the account of the lender. Here, when the transfer is possible when the load is generated, the transfer may be immediately performed by the transfer module 711 without passing through the customer deposits restriction setting module 709 and the customer deposits restriction cancelation module 710. In addition, the transfer module 711 may transfer a portion corresponding to the interest in the loan to the account of the securities company and transfer a portion excluding the interest in the loan is transferred to the account of the lender. Here, the portion corresponding to the interest in the loan may be calculated by applying an interest rate designated by a contract between parties (the customer and the securities company) to the portion excluding the interest in the loan from a point in time at which the loan is generated to a point in time at which the loan disappears. Thereafter, when cash of the above-described sell execution money amount is generated and the customer deposits are generated, the loan module 713 may eliminate the loan by offsetting the customer deposits and the loan.

In an exemplary embodiment, when there is an unexecuted quantity in which the sell execution has failed in the securities as a result of executing the sell trade by the order processing module 706 within a valid order time, the securities restriction setting module 704 may set the sell restriction on the unexecuted quantity in the account information DB 702.

In an exemplary embodiment, the customer deposits restriction setting module 709 compares the customer deposits to the loan principal and interest, sets the withdrawal restriction, the transfer restriction, and the securities buy restriction on customer deposits corresponding to the loan principal and interest among the customer deposits in the account information DB 702 when a result of the comparison represents that the customer deposits are greater than or equal to the loan principal and interest, and sets the withdrawal restriction, the transfer restriction, and the securities buy restriction on a total of the customer deposits in the account information DB 702 when the result of the comparison represents that the customer deposits are less than the loan principal and interest.

In an exemplary embodiment, the interface module 701 may transmit a transfer approval request message for the customer deposits to the lender server before the customer deposits restriction cancelation module 710 cancels the transfer restriction set on the customer deposits in the account information DB. The customer deposits restriction cancelation module 710 may cancel the transfer restriction set on the customer deposits in the account information DB 702 when the interface module 701 receives a transfer approval message for the customer deposits from the lender server in response to the transmission.

In an exemplary embodiment, the customer deposits restriction cancelation module 710 may compare the customer deposits to the loan principal and interest, cancel the transfer restriction set on customer deposits corresponding to the loan principal and interest among the customer deposits in the account information DB 702 when a result of the comparison represents that the customer deposits are greater than or equal to the loan principal and interest, and cancel the transfer restriction set on a total of the customer deposits in the account information DB 702 when the result of the comparison represents that the customer deposits are less than the loan principal and interest.

In an exemplary embodiment, when the transfer of the customer deposits by the transfer module 711 fails due to other reasons such as computer problems, the customer deposits restriction setting module 709 may set the transfer restriction on the customer deposits in the account information DB, and the interface module 701 may transmit a transfer failure message to at least one of the customer terminal, the manager terminal, and the lender server.

In an exemplary embodiment, when the interface module 701 receives a message representing that repayment of the loan principal and interest has been completed from the lender server, the account information update module 712 may cancel restrictions set on at least one of the securities, the sell execution money amount, and the customer deposits for securing the loan principal and interest in the account information DB 702. At this time, the interface module 701 may transmit a message related to repayment of the loan principal and interest and cancelation of the security right to the customer terminal.

In an exemplary embodiment, when the interface module 701 receives an order for canceling the sell order from the customer terminal or the manager terminal, the order processing module 706 cancels the sell order and the securities restriction setting module 704 sets the sell restriction on an unexecuted quantity in which the sell trade is not executed in the securities in the account information DB 702.

In an exemplary embodiment, the interface module 701 may receive the buy order for buying the securities using the sell execution money amount or the customer deposits on which the securities buy restriction is set in the account information DB from the customer terminal or the manager terminal. The buy order refers to an order for buying the securities using the sell execution money amount or the customer deposits on which the securities buy restriction is set generated by selling the securities on which the sell restriction and the sell restriction management agreement are set in the account information DB. When the sell execution money amount or the customer deposits for which the security buy restriction is canceled in the account information DB is insufficient to buy the securities according to the buy order, the buy order using the sell execution money amount or the customer deposits on which the securities buy restriction is set may be generated for a deficit. In addition, the buy order may be generated using the sell execution money amount or the customer deposits on which the securities buy restriction is set according to an intention of a person who issues the buy order regardless of the presence of the sell execution money amount or the customer deposits for which the securities buy restriction is canceled in the account information DB.

When the interface module 701 receives the buy order, the buy order permission determination module 714 may determine whether the buy order is permitted. In an exemplary embodiment, the buy order permission determination module 714 may determine that the buy order is permitted when an item of the securities serving as a target of the buy order is included in a buy permission list. In an exemplary embodiment, when the buy order permission determination module 714 determines that the item of the securities serving as the target of the buy order is included in the buy permission list, the interface module 701 may transmit a buy approval request message for the securities to the lender server. When the interface module 701 receives a buy approval message for the securities from the lender server in response to the transmission, the buy order permission determination module 714 may determine that the buy order is permitted.

Here, the buy permission list represents securities capable of being bought using the sell execution money amount or customer deposits on which the disposal restriction is set. The buy permission list may include an item of the sold securities which becomes a cause of the setting of the securities buy restriction for the sell execution money amount or the customer deposits. The item of the securities within the buy permission list may be designated by a contract between parties or by the manager. In addition, the item of the securities within the buy permission list should be approved by the lender. For this, the interface module 701 may transmit an approval request message for the buy permission list to the lender server, and receive an approval message for the buy permission list from the lender in response to the transmission. In this case, the buy order permission determination module 714 may determine whether the buy order is permitted using the buy permission list approved by the lender. The transmission of the approval request message for the buy permission list by the interface module 701 may be performed periodically/aperiodically. For example, when a change in the item of the securities within the buy permission list is made, the transmission may be performed.

The sell execution money amount restriction cancelation module 708 cancels the securities buy restriction set on the sell execution money amount when the buy order permission determination module 714 determines that the buy order using the sell execution money amount on which the securities buy restriction is set in the account information DB 702 is permitted. In addition, the customer deposits restriction cancelation module 710 may cancel the securities buy restriction set on the customer deposits in the account information DB 702 when the buy order permission determination module 714 determines that the buy order using the customer deposits on which the securities buy restriction is set in the account information DB 702 is permitted.

The order processing module 706 may execute a buy trade according to the buy order using the sell execution money amount for which the securities buy restriction is canceled by the sell execution money amount restriction cancelation module 708 or the customer deposits for which the securities buy restriction is canceled by the customer deposits restriction cancelation module 710, and the securities restriction setting module 704 may set the sell restriction, the delivery restriction, the transfer restriction, and the sell restriction management agreement on the securities bought by the order processing module 706 executing the buy trade. At this time, the securities restriction setting module 704 may set the sell restriction, the transfer restriction, and the sell restriction management agreement on the securities in quantity equal to a quantity of sold securities among bought securities when a quantity of bought securities is greater than a quantity of sold securities which becomes a cause of the setting of the securities buy restriction of the sell execution money amount or customer deposits. However, when there is a non-execution money amount in which the buy trade is not executed in the sell execution money amount or the customer deposits as a result of executing the buy trade by order processing module 706 within a valid order time, the sell execution money amount restriction setting module 707 or the customer deposits restriction setting module 709 may set the securities buy restriction on the non-execution money amount in the account information DB 702. On the other hand, when the interface module 701 receives an order for canceling the buy order from the customer terminal or the manager terminal, the order processing module 706 cancels the buy order and the securities restriction setting module 704 or the customer deposits restriction setting module 709 may set the securities buy restriction on a non-execution money amount in which the buy trade is not executed in the sell execution money amount or the customer deposits in the account information DB 702.

In an exemplary embodiment, new securities or customer deposits may be generated from securities on which the sell restriction and a sell restriction cancelation agreement are set in the account information DB 702 due to a capital decrease, a capital increase, a stock split, a reverse stock split, stock retirement, etc. In this case, the securities restriction setting module 704 may set the sell restriction and the sell restriction management agreement on the new securities in the account information DB 702 or the customer deposits restriction setting module 709 may set the withdrawal restriction, the transfer restriction, and the securities buy restriction on the new customer deposits in the account information DB 702.

In an exemplary embodiment, the interface module 701 may receive a trade stop signal from the manager terminal or the lender server. When the trade stop signal is for the securities on which the sell restriction is set in the account information DB 702, the sell restriction set on the securities is not canceled in the account information DB 702 until the interface module 701 receives a trade resumption signal for the securities from the manager. When the trade stop signal is for the securities for which the sell trade is in execution, the order processing module 706 cancels the sell trade for the securities, the securities restriction setting module 704 sets the sell restriction on an unexecuted quantity in which the sell trade is not executed among the securities in the account information DB 702, and the sell restriction set on the unexecuted quantity is not canceled in the account information DB 702 until the interface module 701 receives a trade resumption signal for the securities from the manager terminal or the lender server. When the trade stop signal is for the sell execution money amount, the securities buy restriction set on the sell execution money amount is not canceled in the account information DB 702 until the interface module 701 receives a trade resumption signal for the sell execution money amount from the manager terminal or the lender server. When the trade stop signal is for the customer deposits, the transfer restriction and the securities buy restriction set on the customer deposits are not canceled in the account information DB 702 until the interface module 701 receives a trade resumption signal for the customer deposits from the manager terminal or the lender server. When the trade stop signal is for the sell execution money amount or the customer deposits in which the buy trade is in execution, the order processing module 706 cancels the buy trade for the securities through the stock market so as to stop the buy trade in execution, the sell execution money amount restriction cancelation module 708 sets the securities buy restriction on a non-execution money amount in which the buy trade is not executed in the sell execution money amount or the customer deposits in the account information DB 702, and the securities buy restriction set on the non-execution money amount is not canceled in the account information DB 702 until the interface module 701 receives a trade resumption signal for the sell execution money amount or the customer deposits from the manger terminal or the lender server.

In an exemplary embodiment, the interface module 701 may receive loan principal and interest information including loan principal, loan interest, a repayment history, and an item and a quantity of the securities for securing the loan principal and interest from the lender server. In addition, the interface module 701 may transmit information about a value and a mortgage rate of the securities on which the sell restriction and the sell restriction management agreement are set in the account information DB 702 to at least one of the lender server and the customer terminal, wherein the mortgage rate may be determined by (Value of Securities/Loan Principal and Interest). The transmission may be performed periodically or aperiodically. For example, the transmission may be performed at a time designated by an agreement among the securities company, the customer, and the lender or performed when the mortgage rate is less than or equal to a predetermined threshold value, wherein the predetermined threshold value may be a value designated by the lender. The information is an example, and the present invention is not restricted to the above-described configuration. A design may be modified in various forms according to a need of those skilled in the art. In this manner, the securities company server may contribute to the management of a security by receiving and managing information about the loan principal and interest from the lender server, and contribute to the determination of eligibility of the security by the lender by transmitting the information about the value and the mortgage rate of the securities to the lender server. In addition, it is possible to rapidly identify and cope with a situation related to the security through information sharing between the lender server and the securities company server.

According to the present invention, a disposal restriction on securities can be set or canceled by setting up a security right or creating other contracts according to an enterprise declaration of will. Also, according to the present invention, securities liquidity and stability can be increased by enabling an owner of securities to dispose of the securities having a disposal restriction set through a sell restriction management agreement, as well as by imposing certain restrictions on disposal.

As described above, the optimum exemplary embodiments have been described and illustrated in the drawings and the description. Herein, specific terms have been used, but are just used for the purpose of describing the present invention and are not used for defining the meaning or restricting the scope of the present invention, which is disclosed in the appended claims. Therefore, it will be appreciated to those skilled in the art that various modifications are made and other equivalent exemplary embodiments are available. Accordingly, the actual technical protection scope of the present invention must be determined by the spirit of the appended claims.

## Claims

1. A securities transaction method to be performed by a server, the securities transaction method comprising the steps of:
receiving a sell order for securities from a customer or a manager;
determining whether a sell restriction and a sell restriction management agreement are set on the securities by referring to an account information database (DB) of the customer;
removing the sell restriction set on the securities in the account information DB when the sell restriction and the sell restriction management agreement are set on the securities;
executing a sell trade for the securities for which the sell restriction is canceled according to the sell order;
setting a securities buy restriction on a sell execution money amount generated by executing the sell trade in the account information DB;
setting a withdrawal restriction, a transfer restriction, and a securities buy restriction on customer deposits which are cash of the sell execution money amount in the account information DB when the cash of the sell execution money amount is generated; and
removing the transfer restriction set on the customer deposits in the account information DB and transferring the customer deposits for which the transfer restriction is canceled to a lender,
wherein the account information DB of the customer includes attribute information about whether the sell restriction, a delivery restriction, an transfer restriction, and the sell restriction management agreement are set on the securities included in a securities account of the customer; attribute information about whether the securities buy restriction is set on the sell execution money amount; and attribute information about whether the withdrawal restriction, the transfer restriction, and the securities buy restriction are set on the customer deposits.

2. The securities transaction method of claim 1, wherein the sell restriction, the delivery restriction, the transfer restriction, and the sell restriction management agreement set on the securities, the securities buy restriction set on the sell execution money amount, and the withdrawal restriction, the transfer restriction, and the securities buy restriction set on the customer deposits in the account information DB are content of a security right or contract set to secure loan principal and interest of the customer.

3. The securities transaction method of claim 1, further comprising the steps of:
receiving attribute information about at least one of the securities, the sell execution money amount, and the customer deposits included in the securities account of the customer from the manager; and
changing the attribute information about the at least one of the securities, the sell execution money amount, and the customer deposits in the account information DB according to the received attribute information.

4. The securities transaction method of claim 1, further comprising the step of:
executing the sell trade for the securities according to the sell order when the sell restriction is not set on the securities in the account information DB.

5. The securities transaction method of claim 1, further comprising the step of:
rejecting the sell order when the sell restriction is set on the securities and the sell restriction management agreement is not set in the account information DB.

6. The securities transaction method of claim 1, wherein the step of removing the sell restriction set on the securities includes the steps of:
transmitting a sell approval request message for the securities to the lender when the sell restriction and the sell restriction management agreement are set on the securities; and
removing the sell restriction set on the securities in the account information DB when a sell approval message for the securities is received from the lender in response to the transmission.

7. The securities transaction method of claim 6, wherein the sell approval message includes a message related to presence/absence of transfer approval for the customer deposits to be generated by selling the securities.

8. The securities transaction method of claim 1, further comprising the step of:
setting the sell restriction on an unexecuted quantity in the account information DB when there is the unexecuted quantity in which the sell execution has failed in the securities as a result of executing the sell trade within a valid order time.

9. The securities transaction method of claim 1, further comprising the steps of: generating a loan corresponding to the sell execution money amount by offering the sell execution money amount generated by executing the sell trade as security; and
offsetting the customer deposits which are the cash of the sell execution money amount and the loan when the cash of the sell execution money amount is generated.

10. The securities transaction method of claim 9, wherein the step of setting the withdrawal restriction, the transfer restriction, and the security buy restriction on the customer deposits and the step of transferring the customer deposits to the lender are performed based on the loan rather than the customer deposits.

11. The securities transaction method of claim 10, wherein, when the step of transferring the customer deposits to the lender is performed based on the loan rather than the customer deposits, a portion corresponding to the interest in the loan is transferred to a securities company and a portion excluding the interest in the loan is transferred to the lender.

12. The securities transaction method of claim 2, wherein the step of setting the withdrawal restriction, the transfer restriction, and the securities buy restriction on the customer deposits further includes the steps of:
comparing the customer deposits to the loan principal and interest;
setting the withdrawal restriction, the transfer restriction, and the securities buy restriction on customer deposits corresponding to the loan principal and interest among the customer deposits in the account information DB when a result of the comparison represents that the customer deposits are greater than or equal to the loan principal and interest; and
setting the withdrawal restriction, the transfer restriction, and the securities buy restriction on a total of the customer deposits in the account information DB when the result of the comparison represents that the customer deposits are less than the loan principal and interest.

13. The securities transaction method of claim 1, wherein the step of transferring the customer deposits to the lender includes the steps of:
transmitting a transfer approval request message for the customer deposits to the lender; and
removing the transfer restriction set on the customer deposits in the account information DB when a transfer approval message for the customer deposits is received from the lender in response to the transmission, and transferring the customer deposits for which the transfer restriction is canceled to the lender.

14. The securities transaction method of claim 2, wherein the step of transferring the customer deposits to the lender further includes the steps of:
comparing the customer deposits to the loan principal and interest;
removing the transfer restriction set on customer deposits corresponding to the loan principal and interest among the customer deposits in the account information DB when a result of the comparison represents that the customer deposits are greater than or equal to the loan principal and interest;
removing the transfer restriction set on a total of the customer deposits in the account information DB when the result of the comparison represents that the customer deposits are less than the loan principal and interest; and
transferring the customer deposits for which the transfer restriction is canceled to the lender.

15. The securities transaction method of claim 1, further comprising the step of:
setting the transfer restriction on the customer deposits in the account information DB if a transfer has failed although the step of transferring the customer deposits to the lender was performed.

16. The securities transaction method of claim 1, further comprising the steps of:
receiving a buy order for buying the securities using the sell execution money amount or the customer deposits on which the securities buy restriction is set in the account information DB from the customer or the manager;
determining whether the buy order is permitted;
removing the securities buy restriction set on the sell execution money amount or the customer deposits in the account information DB when it is determined that the buy order is permitted;
executing a buy trade according to the buy order using the sell execution money amount or the customer deposits for which the securities buy restriction is canceled; and
setting the sell restriction, the delivery restriction, the transfer restriction, and the sell restriction management agreement on the securities bought by executing the buy trade in the account information DB.

17. The securities transaction method of claim 16,
wherein the step of determining whether the buy order is permitted includes the step of: determining that the buy order is permitted when an item of the securities serving as a target of the buy order is included in a buy permission list, and
wherein the buy permission list includes items of the securities designated to be bought.

18. The securities transaction method of claim 16, wherein the step of determining whether the buy order is permitted includes the steps of:
transmitting a buy approval request message for the securities to the lender when an item of the securities serving as a target of the buy order is included in a buy permission list; and
determining that the buy order is permitted when a buy approval message for the securities is received from the lender in response to the transmission,
wherein the buy permission list includes an item of the securities designated to be bought.

19. The securities transaction method of claim 17 or 18, further comprising the steps of:
transmitting an approval request message for the buy permission list to the lender; and
receiving an approval message for the buy permission list from the lender in response to the transmission,
wherein the step of determining whether the buy order is permitted is performed using the buy permission list approved by the lender.

20. The securities transaction method of claim 17 or 18, wherein the buy permission list includes items of sold securities which become a cause of the setting of the securities buy restriction on the sell execution money amount or the customer deposits.

21. The securities transaction method of claim 16, further comprising the step of:
setting the securities buy restriction on a non-execution money amount in the account information DB when there is the non-execution money amount in which the buy trade is not executed in the sell execution money amount or the customer deposits as a result of executing the buy trade within a valid order time.

22. The securities transaction method of claim 16, further comprising the steps of:
canceling the buy order when an order for canceling the buy order is received from the customer or the manager and setting the securities buy restriction on a non-execution money amount in which the buy trade is not executed in the sell execution money amount or the customer deposits in the account information DB.

23. The securities transaction method of claim 1, further comprising the steps of:
canceling the sell order when an order for canceling the sell order is received from the customer or the manager and setting the sell restriction on an unexecuted quantity in which the sell execution has failed in the securities in the account information DB.

24. The securities transaction method of claim 1, further comprising the step of:
receiving a trade stop signal for the securities on which the sell restriction is set in the account information DB from the manager or the lender,
wherein, when the trade stop signal is received, the sell restriction set on the securities is not canceled in the account information DB until a trade resumption signal for the securities is received from the manager.

25. The securities transaction method of claim 1, further comprising the steps of:
receiving a trade stop signal for the securities for which the sell trade is in execution from the manager or the lender; and
canceling the sell trade in execution and setting the sell restriction on an unexecuted quantity in which the sell trade is not executed among the securities in the account information DB,
wherein, when the trade stop signal is received, the sell restriction set on the unexecuted quantity is not canceled in the account information DB until a trade resumption signal for the securities is received from the manager.

26. The securities transaction method of claim 1, further comprising the step of:
receiving a trade stop signal for the sell execution money amount from the manager or the lender,
wherein, when the trade stop signal is received, the securities buy restriction set on the sell execution money amount is not canceled in the account information DB until a trade resumption signal for the sell execution money amount is received from the manager.

27. The securities transaction method of claim 1, further comprising the step of:
receiving a trade stop signal for the customer deposits from the manager or the lender,
wherein, when the trade stop signal is received, the transfer restriction and the securities buy restriction set on the customer deposits are not canceled in the account information DB until a trade resumption signal for the customer deposits is received from the manager.

28. The securities transaction method of claim 16, further comprising the steps of:
receiving a trade stop signal for the sell execution money amount or the customer deposits from the manager or the lender while the buy trade is executed; and
canceling the buy trade in execution and setting the securities buy restriction on a non-execution money amount in which the buy trade is not executed in the sell execution money amount or the customer deposits in the account information DB,
wherein, when a trade stop signal is received, the securities buy restriction set on the non-execution money amount is not canceled in the account information DB until a trade resumption signal for the sell execution money amount or the customer deposits is received from the manger.

29. The securities transaction method of claim 2, further comprising the step of:
receiving information about loan principal and interest including loan principal, loan interest, a repayment history, and an item and a quantity of the securities for securing the loan principal and interest from the lender.

30. The securities transaction method of claim 2, further comprising:
transmitting information about a value and a mortgage rate of the securities on which the sell restriction and the sell restriction management agreement are set in the account information DB to at least one of the lender and the customer,
wherein the mortgage rate is determined by (Value of Securities/Loan Principal and Interest).

31. The securities transaction method of claim 1, wherein the step of transmitting the information about the value and the mortgage rate of the securities is performed when the mortgage rate is less than or equal to a predetermined threshold value.

32. The securities transaction method of claim 1, further comprising the step of:
setting the sell restriction and the sell restriction management agreement on new securities in the account information DB when the new securities are generated from the securities on which the sell restriction and a sell restriction management agreement are set in the account information DB.

33. The securities transaction method of claim 1, further comprising the step of:
setting the withdrawal restriction, the transfer restriction, and the securities buy restriction on new customer deposits in the account information DB when the new customer deposits are generated from the securities on which the sell restriction and a sell restriction management agreement are set in the account information DB.

34. The securities transaction method of claim 2, further comprising the step of:
removing all restrictions set on at least one of the securities, the sell execution money amount, and the customer deposits so as to secure the loan principal and interest in the account information DB when a message representing that repayment of the loan principal and interest has been completed is received from the lender.

35. The securities transaction method of claim 2, further comprising the step of:
transmitting a message related to repayment completion of the loan principal and interest to the customer when a message representing that repayment of the loan principal and interest has been completed is received from the lender.

36. The securities transaction method of any one of claims 1 to 18 and 21 to 35, wherein, when at least one of pieces of attribute information within the account information DB is changed, a message related to the changed attribute information is transmitted to the lender.

37. A securities transaction apparatus comprising:
an interface module configured to communicate with a customer, a manager, and a lender;
an account information DB including attribute information about whether a sell restriction, a delivery restriction, an transfer restriction, and a sell restriction management agreement are set on securities included in a securities account of the customer, attribute information about whether a securities buy restriction is set on a sell execution money amount, and attribute information about whether a withdrawal restriction, a transfer restriction, and the securities buy restriction are set on customer deposits;
a sell order permission determination module configured to determine whether the sell restriction and the sell restriction management agreement are set on the securities by referring to the account information DB when the interface module receives the sell order for the securities from the customer or the manager;
a securities restriction cancelation module configured to cancel the sell restriction set on the securities in the account information DB when the sell order permission determination module determines that the sell restriction and the sell restriction management agreement are set on the securities;
an order processing module configured to execute a sell trade for the securities for which the sell restriction is canceled according to the sell order;
a sell execution money amount restriction setting module configured to set the securities buy restriction on the sell execution money amount generated by executing the sell trade by the order processing module in the account information DB;
a customer deposits restriction setting module configured to set the withdrawal restriction, the transfer restriction, and the securities buy restriction on the customer deposits which are cash of the sell execution money amount in the account information DB when the cash of the sell execution money amount is generated;
a customer deposits restriction cancelation module configured to cancel the transfer restriction set on the customer deposits in the account information DB; and
a transfer module configured to transfer the customer deposits for which the transfer restriction is canceled to the lender.

38. The securities transaction apparatus of claim 37, wherein the sell restriction, the delivery restriction, the transfer restriction, and the sell restriction management agreement set on the securities, the securities buy restriction set on the sell execution money amount, and the withdrawal restriction, the transfer restriction, and the securities buy restriction set on the customer deposits in the account information DB are content of a security right or contract set to secure loan principal and interest of the customer.

39. The securities transaction apparatus of claim 37, further comprising:
an account information update module configured to change attribute information about at least one of the securities, the sell execution money amount, and the customer deposits in the account information DB according to received attribute information when the interface module receives the attribute information about the at least one of the securities, the sell execution money amount, and the customer deposits included in the securities account of the customer from the manager.

40. The securities transaction apparatus of claim 37, wherein, when the sell order permission determination module determines that the sell restriction is not set on the securities in the account information DB, the order processing module executes the sell trade for the securities according to the sell order.

41. The securities transaction apparatus of claim 37, wherein, when the sell order permission determination module determines that the sell restriction is set on the securities and the sell restriction management agreement is not set in the account information DB, the order processing module rejects the sell order.

42. The securities transaction apparatus of claim 37,
wherein, when the sell order permission determination module determines that the sell restriction and the sell restriction management agreement are set on the securities, the interface module transmits a sell approval request message for the securities to the lender before the securities restriction cancelation module cancels the sell restriction set on the securities in the account information DB, and
wherein, when the interface module receives a sell approval message for the securities from the lender in response to the transmission, the securities restriction cancelation module cancels the sell restriction set on the securities in the account information DB.

43. The securities transaction apparatus of claim 42,
wherein the sell approval message includes a message related to presence/absence of transfer approval for the customer deposits to be generated by selling the securities, and
wherein, when the message related to the presence/absence of the transfer approval does not indicate the transfer approval, the customer deposits restriction cancelation module does not cancel the transfer restriction set on the customer deposits generated by selling the securities in the account information DB.

44. The securities transaction apparatus of claim 37, further comprising:
a securities restriction setting module configured to set at least one of the sell restriction, the delivery restriction, the transfer restriction, and the sell restriction management agreement on the securities in the account information DB.

45. The securities transaction apparatus of claim 44, wherein the securities restriction setting module sets the sell restriction on an unexecuted quantity in the account information DB when there is the unexecuted quantity in which the sell execution has failed in the securities as a result of executing the sell trade by the order processing module within a valid order time.

46. The securities transaction apparatus of claim 37, further comprising: a loan module configured to generate a loan corresponding to the sell execution money amount by offering the sell execution money amount generated by executing the sell trade as security,
wherein, when the cash of the sell execution money amount is generated, the loan generated by the loan module are offset with the customer deposits which are the cash of the sell execution money amount.

47. The securities transaction apparatus of claim 46, wherein, when the loan is generated by the loan module, the customer deposits restriction setting module sets the withdrawal restriction, the transfer restriction, and the securities buy restriction on the loan in the account information DB, the customer deposits restriction cancelation module cancels the transfer restriction set on the loan in the account information DB, and the transfer module transfers the loan for which the transfer restriction is canceled to the lender.

48. The securities transaction apparatus of claim 47, wherein, when the transfer module transfers the loan for which the transfer restriction is canceled to the lender, the transfer module transfers a portion corresponding to the interest in the loan to a securities company and transfers a portion excluding the interest in the loan to the lender.

49. The securities transaction apparatus of claim 38, wherein the customer deposits restriction setting module:
compares the customer deposits to the loan principal and interest,
sets the withdrawal restriction, the transfer restriction, and the securities buy restriction on customer deposits corresponding to the loan principal and interest among the customer deposits in the account information DB when a result of the comparison represents that the customer deposits are greater than or equal to the loan principal and interest, and
sets the withdrawal restriction, the transfer restriction, and the securities buy restriction on a total of the customer deposits in the account information DB when the result of the comparison represents that the customer deposits are less than the loan principal and interest.

50. The securities transaction apparatus of claim 37,
wherein the interface module transmits a transfer approval request message for the customer deposits to the lender before the customer deposits restriction cancelation module cancels the transfer restriction set on the customer deposits in the account information DB, and
wherein the customer deposits restriction cancelation module cancels the transfer restriction set on the customer deposits in the account information DB when the interface module receives a transfer approval message for the customer deposits from the lender in response to the transmission.

51. The securities transaction apparatus of claim 38, wherein the customer deposits restriction cancelation module:
compares the customer deposits to the loan principal and interest,
cancels the transfer restriction set on customer deposits corresponding to the loan principal and interest among the customer deposits in the account information DB when a result of the comparison represents that the customer deposits are greater than or equal to the loan principal and interest, and
cancels the transfer restriction set on a total of the customer deposits in the account information DB when the result of the comparison represents that the customer deposits are less than the loan principal and interest.

52. The securities transaction apparatus of claim 37, wherein, when the transfer of the customer deposits by the transfer module fails, the customer deposits restriction setting module sets the transfer restriction on the customer deposits in the account information DB.

53. The securities transaction apparatus of claim 44, further comprising:
a buy order permission determination module configured to determine whether a buy order is permitted when the interface module receives the buy order for buying the securities using the sell execution money amount or the customer deposits on which the securities buy restriction is set in the account information DB from the customer or the manager; and
a sell execution money amount restriction cancelation module configured to cancel the securities buy restriction set on the sell execution money amount when the buy order permission determination module determines that the buy order using the sell execution money amount on which the securities buy restriction is set in the account information DB is permitted,
wherein the customer deposits restriction cancelation module cancels the securities buy restriction set on the customer deposits in the account information DB when the buy order permission determination module determines that the buy order using customer deposits on which the securities buy restriction is set in the account information DB is permitted,
wherein the order processing module executes a buy trade according to the buy order using the sell execution money amount for which the securities buy restriction is canceled by the sell execution money amount restriction cancelation module or the customer deposits for which the securities buy restriction is canceled by the customer deposits restriction cancelation module, and
wherein the securities restriction setting module sets the sell restriction, the delivery restriction, the transfer restriction, and the sell restriction management agreement on the securities bought by the order processing module executing the buy trade.

54. The securities transaction apparatus of claim 53,
wherein the buy order permission determination module determines that the buy order is permitted when an item of the securities serving as a target of the buy order is included in a buy permission list, and
wherein the buy permission list includes items of the securities designated to be bought.

55. The securities transaction apparatus of claim 53,
wherein the buy order permission determination module determines whether an item of the securities serving as a target of the buy order is included in a buy permission list;
wherein, when the buy order permission determination module determines that the item of the securities serving as the target of the buy order is included in the buy permission list, the interface module transmits a buy approval request message for the securities to the lender,
wherein, when the interface module receives a buy approval message for the securities from the lender in response to the transmission, the buy order permission determination module determines that the buy order is permitted, and
wherein the buy permission list includes an item of the securities designated to be bought.

56. The securities transaction apparatus of claim 54 or 55,
wherein the interface module transmits an approval request message for the buy permission list to the lender, and
wherein, when the interface module receives an approval message for the buy permission list from the lender in response to the transmission, the buy order permission determination module uses the buy permission list approved by the lender in determining whether the buy order is permitted.

57. The securities transaction apparatus of claim 54 or 55, wherein the buy permission list includes items of sold securities which become a cause of the setting of the securities buy restriction on the sell execution money amount or the customer deposits.

58. The securities transaction apparatus of claim 53, wherein, when there is a non-execution money amount in which the buy trade is not executed in the sell execution money amount or the customer deposits as a result of executing the buy trade by order processing module within a valid order time, the sell execution money amount restriction setting module or the customer deposits restriction setting module sets the securities buy restriction on the non-execution money amount in the account information DB.

59. The securities transaction apparatus of claim 53, wherein, when the interface module receives an order for canceling the buy order from the customer or the manager, the order processing module cancels the buy order and the sell execution money amount restriction setting module or the customer deposits restriction setting module sets the securities buy restriction on a non-execution money amount in which the buy trade is not executed in the sell execution money amount or the customer deposits in the account information DB.

60. The securities transaction apparatus of claim 37, wherein, when the interface module receives an order for canceling the sell order from the customer or the manager, the order processing module cancels the sell order and the securities restriction setting module sets the sell restriction on an unexecuted quantity in which the sell execution has failed in the securities in the account information DB.

61. The securities transaction apparatus of claim 37, wherein, when the interface module receives a trade stop signal for the securities on which the sell restriction is set in the account information DB from the manager or the lender, the sell restriction set on the securities is not canceled in the account information DB until the interface module receives a trade resumption signal for the securities from the manager.

62. The securities transaction apparatus of claim 44, wherein, when the interface module receives a trade stop signal for the securities for which the sell trade is in execution from the manager or the lender, the order processing module cancels the sell trade in execution, the securities restriction setting module sets the sell restriction on an unexecuted quantity in which the sell trade is not executed among the securities in the account information DB, and the sell restriction set on the unexecuted quantity is not canceled in the account information DB until the interface module receives a trade resumption signal for the securities from the manager.

63. The securities transaction apparatus of claim 37, wherein, when the interface module receives a trade stop signal for the sell execution money amount from the manager or the lender, the securities buy restriction set on the sell execution money amount is not canceled in the account information DB until the interface module receives a trade resumption signal for the sell execution money amount from the manager.

64. The securities transaction apparatus of claim 37, wherein, when the interface module receives a trade stop signal for the customer deposits from the manager or the lender, the transfer restriction and the securities buy restriction set on the customer deposits are not canceled in the account information DB until the interface module receives a trade resumption signal for the customer deposits from the manager.

65. The securities transaction apparatus of claim 53, wherein, when the interface module receives a trade stop signal for the sell execution money amount or the customer deposits from the manager or the lender while the buy trade is performed, the order processing module cancels the buy trade in execution, the sell execution money amount restriction setting module or the customer deposits restriction setting module sets the securities buy restriction on a non-execution money amount in which the buy trade is not executed in the sell execution money amount or the customer deposits in the account information DB, and the securities buy restriction set on the non-execution money amount is not canceled in the account information DB until the interface module receives a trade resumption signal for the sell execution money amount or the customer deposits from the manger.

66. The securities transaction apparatus of claim 38, wherein the interface module receives loan principal and interest information including loan principal, loan interest, a repayment history, and an item and a quantity of the securities for securing the loan principal and interest from the lender.

67. The securities transaction apparatus of claim 38,
wherein the interface module transmits information about a value and a mortgage rate of the securities on which the sell restriction and the sell restriction management agreement are set in the account information DB to at least one of the lender and the customer, and
wherein the mortgage rate is determined by (Value of Securities/Loan Principal and Interest).

68. The securities transaction apparatus of claim 37, wherein the interface module transmits the information about the value and the mortgage rate of the securities to at least one of the lender and the customer when the mortgage rate is less than or equal to a predetermined threshold value.

69. The securities transaction apparatus of claim 44, wherein, when new securities are generated from the securities on which the sell restriction and a sell restriction management agreement are set in the account information DB, the securities restriction setting module sets the sell restriction and the sell restriction management agreement on the new securities in the account information DB.

70. The securities transaction apparatus of claim 37, wherein when new customer deposits are generated from the securities on which the sell restriction and a sell restriction management agreement are set in the account information DB, the customer deposits restriction setting module sets the withdrawal restriction, the transfer restriction, and the securities buy restriction on the new customer deposits in the account information DB.

71. The securities transaction apparatus of claim 38, wherein, when the interface module receives a message representing that repayment of the loan principal and interest has been completed from the lender, the account information update module cancels restrictions set on at least one of the securities, the sell execution money amount, and the customer deposits for securing the loan principal and interest in the account information DB.

72. The securities transaction apparatus of claim 38, wherein, when the interface modules receives a message representing that repayment of the loan principal and interest has been completed from the lender, the interface module transmits a message related to repayment of the loan principal and interest and cancelation of the security right to the customer.

73. The securities transaction apparatus of any one of claims 37 to 55 and 58 to 72, wherein, when at least one of pieces of attribute information within the account information DB is changed, the interface module transmits a message related to the changed attribute information to the lender.
